Europäisches Patentamt

European Patent Office

Office européen des brevets

(19)

(11) EP 1 375 590 A2

(12) EUROPEAN PATENT APPLICATION

(43) Date of publication:
02.01.2004 Bulletin 2004/01

(51) Int Cl.⁷: **C08L 51/04**, C08K 3/00

(21) Application number: 03252941.4

(22) Date of filing: 12.05.2003

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: 13.05.2002 JP 2002137622
17.07.2002 JP 2002208671
17.07.2002 JP 2002208672

(71) Applicant: **Techno Polymer Co., Ltd.
Tokyo (JP)**

(72) Inventors:
• **Kawakami, Kazuyoshi,**
**c/o Techno Polymer Co., Ltd**
**Chuo-ku, Tokyo (JP)**
• **Sumimoto, Norifumi,**
**c/o Techno Polymer Co., Ltd**
**Chuo-ku, Tokyo (JP)**
• **Mawatari, Masaaki, c/o Techno Polymer Co., Ltd**
**Chuo-ku, Tokyo (JP)**

(74) Representative: **Benson, John Everett**
**J. A. Kemp & Co.,**
**14 South Square,**
**Gray's Inn**
**London WC1R 5JJ (GB)**

(54) **Laser-marking thermoplastic resin composition**

(57) The present invention relates to a laser-marking thermoplastic resin composition, comprising:

[A] a rubber-reinforced thermoplastic resin comprising a copolymer resin (A1) obtained by polymerizing a vinyl-based monomer (b) containing a (meth) acrylic acid ester in the presence of a rubber polymer (a), or a mixture of the copolymer resin (A1) and a (co)polymer (A2) of vinyl-based monomer(s),

said rubber polymer (a), (meth)acrylic acid ester units (b1) and monomer units (b2) other than the (meth) acrylic ester units (b1) being contained in amounts of 5 to 40% by weight, 25 to 60% by weight and 0 to 70% by weight, respectively, with the proviso that a total content of the components (a), (b1) and (b2) is 100% by weight;

[B] at least one material selected from the group consisting of an epoxy-containing polymer (B-1) and particles (B-2) having an average particle diameter of 0.05 to 150 μm, the component [B] being excluded from the component (A2); and
[C] a black substance.

EP 1 375 590 A2

**Description**

BACKGROUND OF THE INVENTION

The present invention relates to a laser-marking thermoplastic resin composition, and more particularly, to a laser-marking thermoplastic resin composition capable of forming clear laser markings on the surface of a molded product obtained therefrom by irradiation of laser thereto, and providing a molded product which is excellent in not only appearance and impact resistance, but also durability and recognizability of the laser markings formed thereon.

Hitherto, such a technique is known that when a molded product produced from a composition comprising a thermoplastic resin and a black-based compound blended therein is irradiated with laser, the irradiated portions are discolored to black or white (Japanese Patent Publication (KOKOKU) No. 62-59663 (1987), Japanese Patent Application Laid-Open (KOHYO) No. 10-501014 (1998), etc.). Such a laser-marking technique has been used in many applications for printing various marks or characters on respective keys of a keyboard, printing characters on a panel of facsimile, etc. Thus, the laser-marking technique allows the marks or characters to be printed at lower costs and the marks or characters printed by the laser-marking technique are excellent in durability and recognizability, as compared to those produced by conventional tampon (pad) printing method.

Also, in Japanese Patent Application Laid-Open (KOKAI) No. 2001-139758, there is described the laser-marking thermoplastic resin material capable of forming white characters on a molded product produced therefrom. However, the white characters thus formed on keys of a keyboard by laser-marking method suffer from break and thin portions at the surface thereof with the increase in frequency of key touches, and finally become unrecognizable.

SUMMARY OF THE INVENTION

An object of the present invention is to provide a laser-marking thermoplastic resin composition capable of forming clear laser markings such as white characters on the surface of a molded product produced therefrom, and providing a molded product that is excellent in not only appearance and impact resistance, but also durability and recognizability of the laser markings formed thereon.

As a result of the present inventors' earnest study to solve the above problem, it has been found that the above object can be accomplished by such a composition obtained by incorporating specific amounts of an epoxy-containing polymer and/or particles having an average particle diameter of 0.05 to 150 μm into a rubber-reinforced thermoplastic resin containing a black substance. The present invention has been attained on the basis of the above finding.

In a first aspect of the present invention, there is provided a laser-marking thermoplastic resin composition, comprising:

[A] a rubber-reinforced thermoplastic resin comprising a copolymer resin (A1) obtained by polymerizing a vinyl-based monomer (b) containing a (meth)acrylic acid ester in the presence of a rubber polymer (a), or a mixture of the copolymer resin (A1) and a (co)polymer (A2) of vinyl-based monomer(s),
said rubber polymer (a), (meth)acrylic acid ester units (b1) and monomer units (b2) other than the (meth) acrylic ester units (b1) being contained in amounts of 5 to 40% by weight, 25 to 60% by weight and 0 to 70% by weight, respectively, with the proviso that a total content of the components (a), (b1) and (b2) is 100% by weight;
(B-1) an epoxy-containing polymer, the component (B-1) being excluded from the component (A2); and
[C] a black substance.

In a second aspect of the present invention, there is provided a laser-marking thermoplastic resin composition, comprising:

[A] a rubber-reinforced thermoplastic resin comprising a copolymer resin (A1) obtained by polymerizing a vinyl-based monomer (b) containing a (meth)acrylic acid ester in the presence of a rubber polymer (a), or a mixture of the copolymer resin (A1) and a (co)polymer (A2) of vinyl-based monomer(s),
said rubber polymer (a), (meth)acrylic acid ester units (b1 and monomer units (b2) other than the (meth) acrylic ester units (b1) being contained in amounts of 5 to 40% by weight, 25 to 60% by weight and 0 to 70% by weight, respectively, with the proviso that a total content of the components (a), (b1) and (b2) is 100% by weight;
(B-2) particles having an average particle diameter of 0.05 to 150 μm, the component (B-2) being excluded from the component (A2); and
[C] a black substance.

In a third aspect of the present invention, there is provided a laser-marking thermoplastic resin composition, comprising:

[A] a rubber-reinforced thermoplastic resin comprising a copolymer resin (A1) obtained by polymerizing a vinyl-based monomer (b) containing a (meth)acrylic acid ester in the presence of a rubber polymer (a), or a mixture of the copolymer resin (A1) and a (co)polymer (A2) of vinyl-based monomer(s),

said rubber polymer (a), (meth)acrylic acid ester units (b1) and monomer units (b2) other than the (meth) acrylic ester units (b1) being contained in amounts of 5 to 40% by weight, 25 to 60% by weight and 0 to 70% by weight, respectively, with the proviso that a total content of the components (a), (b1) and (b2) is 100% by weight;

an epoxy-containing polymer (B-1) and particles having an average particle diameter of 0.05 to 150 μm, the components (B-1) and (B-2) being excluded from the component (A2); and

[C] a black substance.

In a fourth aspect of the present invention, there is provided a thermoplastic resin composition for laser-marking, comprising:

[A] a rubber-reinforced thermoplastic resin comprising a copolymer resin (A1) obtained by polymerizing a vinyl-based monomer (b) containing a (meth)acrylic acid ester in the presence of a rubber polymer (a), or a mixture of the copolymer resin (A1) and a (co)polymer (A2) vinyl-based monomer(s),

said rubber polymer (a), (meth)acrylic acid ester units (b1) and monomer units (b2) other than the (meth) acrylic ester units (b1) being contained in amounts of 5 to 40% by weight, 25 to 60% by weight and 0 to 70% by weight, respectively, with the proviso that a total content of the components (a), (b1) and (b2) is 100% by weight;

an epoxy-containing polymers (B-1) and/or particles having an average particle diameter of 0.05 to 150 μm, the components (B-1) and (B-2) being excluded from the component (A2);

[C] a black substance; and

[D] a thermoplastic resin having a melting point of 150 to 300°C except for those belonging to the components [A] and (b-1), contents of the respective components satisfying the following formulae:

$$[A] + (B\text{-}1) + [D] = 100 \ (\% \ \text{by weight})$$

$$0 < (B\text{-}1) \leq 10 \ (\% \ \text{by weight})$$

$$0 < [D] \leq 10 \ (\% \ \text{by weight})$$

$$0.01 \leq [C]/([A] + (B\text{-}1) + [D]) \leq 5.$$

## DETAILED DESCRIPTION OF THE INVENTION

The present invention will be described in detail below.

The rubber polymer (a) used in the present invention for forming the copolymer resin (A1) constituting the rubber-reinforced thermoplastic resin [A] is a polymer having a rubber elasticity. Examples of the rubber polymer (a) may include diene-based (co)polymers such as polybutadiene, butadiene-styrene copolymer, butadiene-acrylonitrile copolymer, styrene-butadiene-styrene block copolymer, styrene-isoprene-styrene block copolymer, isobutylene-isoprene copolymer and SEES; hydrogenated products of these diene-based (co)polymers including block type, random type and homo type; ethylene-propylene(-non-conjugated diene) copolymer; ethylene-butene-1(-non-conjugated diene) copolymer; polyurethane rubbers; acrylic rubbers; silicone rubbers; or the like. Of these rubber polymers, preferred are polybutadiene, butadiene-styrene copolymer, hydrogenated products of these diene-based (co)polymers, ethylene-propylene(-non-conjugated diene) copolymer, acrylic rubbers and silicone rubbers. These rubber polymers may be used singly or in combination of any two or more thereof.

Meanwhile, when the silicone rubber is used as the rubber polymer (a), the silicone rubber may be copolymerized with a vinyl-containing grafting agent, for example, vinyl-containing compounds such as p-vinylphenylmethyl dimethoxysilane, 2-(p-vinylphenyl)ethyl methyl dimethoxysilane and 2-(p-vinylphenyl)ethylene methyl dimethoxysilane or γ-methacryloxypropylmethyl dimethoxysilane in an amount of 0.01 to 10% by weight in order to obtain a thermoplastic resin composition that provides a molded product having excellent impact resistance and slidability.

The average particle diameter of the rubber polymer (a) is preferably 80 to 800 nm, more preferably 80 to

3

700 nm. When the average particle diameter of the rubber polymer (a) is too small, the obtained composition tends to be deteriorated in impact resistance. On the other hand, when the average particle diameter of the rubber polymer (a) is too large, the obtained composition tends to be deteriorated in fluidity. Also, the rubber polymer (a) may be in the form of a mixture of two or more kinds of rubber polymers having different average particle diameters from each other. When such a mixture is used as the rubber polymer (a), it is possible to obtain a laser-marking thermoplastic resin that can provide a molded product having well-balanced properties between impact resistance, fluidity and the like. When a mixture of two rubber polymers is used, the average particle diameters thereof are preferably 80 to 180 nm and 180 to 480 nm, more preferably 100 to 150 nm and 200 to 400 nm for the respective rubber polymers. When such a mixture of the two rubber polymers having different average particle diameters from each other is used, the contents of the rubber polymers are preferably 5 to 95% by weight and 95 to 5% by weight, respectively, based on the total weight of the rubber polymers as 100% by weight.

The vinyl-based monomer (b) forming the copolymer resin (A1) which is polymerized in the presence of the rubber polymer (a) is not particularly restricted as long as it contains a (meth)acrylic acid ester. Therefore, the vinyl-based monomer (b) may be made of a single (meth)acrylic acid ester or a combination of two or more kinds of (meth) acrylic acid esters solely. Alternatively, the vinyl-based monomer (b) may be the combination of at least one kind of (meth)acrylic acid ester with the other vinyl-based monomer. Among them, the combination of at least one kind of (meth)acrylic acid ester with the other vinyl-based monomer is preferred.

Examples of the (meth)acrylic acid ester may include acrylic acid esters such as methyl acrylate, ethyl acrylate, propyl acrylate, butyl acrylate, amyl acrylate, hexyl acrylate, octyl acrylate, 2-ethylhexyl acrylate, cyclohexyl acrylate and phenyl acrylate; and methacrylic acid esters such as methyl methacrylate, ethyl methacrylate, propyl methacrylate, butyl methacrylate, sec-butyl methacrylate, t-butyl methacrylate, isobutyl methacrylate, amyl methacrylate, hexyl methacrylate, octyl methacrylate, 2-ethylhexyl methacrylate, cyclohexyl methacrylate, dodecyl methacrylate, octadecyl methacrylate, phenyl methacrylate and benzyl methacrylate. Of these (meth)acrylic acid esters, preferred are methyl methacrylate, butyl methacrylate and butyl acrylate, and more preferred is methyl methacrylate. These (meth)acrylic acid esters may be used singly or in combination of any two or more thereof.

Examples of the other vinyl-based polymer used as the vinyl-based polymer (b) may include aromatic vinyl compounds, cyanided vinyl compounds and maleimide-based compounds as well as vinyl-based monomers containing functional groups such as epoxy, hydroxy, carboxyl, amino, amido and oxazoline groups.

Examples of the above aromatic vinyl compounds used as the other vinyl-based monomer may include styrene, $\alpha$-methyl styrene, o-methyl styrene, p-methyl styrene, ethyl styrene, vinyl toluene, vinyl xylene, methyl-$\alpha$-methyl styrene, t-butyl styrene, divinyl benzene, 1,1-diphenyl styrene, N,N-diethyl-p-aminomethyl styrene, N,N-diethyl-p-aminoethyl styrene, vinyl naphthalene, vinyl pyridine, chlorinated styrenes such as monochlorostyrene and dichlorostyrene, brominated styrenes such as monobromostyrene and dibromostyrene, monofluorostyrene or the like. Of these aromatic vinyl compounds, preferred are styrene, $\alpha$-methyl styrene and p-methyl styrene. Also, these aromatic vinyl compounds may be used singly or in combination of any two or more thereof.

Examples of the above cyanided vinyl compounds used as the other vinyl monomer may include acrylonitrile, methacrylonitrile or the like. Of these cyanided vinyl compounds, preferred is acrylonitrile. Also, these cyanided vinyl compounds may be used singly or in combination of any two or more thereof.

Examples of the above maleimide-based compounds may include maleimide, N-methyl maleimide, N-butyl maleimide, N-phenyl maleimide, N-(2-methylphenyl) maleimide, N-(4-hydroxyphenyl) maleimide, N-cyclohexyl maleimide, imide compounds of $\alpha,\beta$-unsaturated dicarboxylic acids or the like. Of these maleimide-based compounds, preferred are N-phenyl maleimide and N-cyclohexyl maleimide. Also, these maleimide-based compounds may be used singly or in combination of any two or more thereof. Meanwhile, the maleimide-based compounds may be incorporated into the (meth)acrylic acid ester, for example, by such a method of copolymerizing the (meth)acrylic acid ester with maleic anhydride and then subjecting the resultant copolymer to imidization.

Examples of the vinyl-based monomers having the above functional groups may include glycidyl methacrylate, glycidyl acrylate, 2-hydroxyethyl methacrylate, 2-hydroxyethyl acrylate, acrylic acid, methacrylic acid, acrylamide, vinyl oxazoline or the like. When these vinyl-based monomers having the above functional groups are copolymerized with the (meth)acrylic acid ester, the obtained copolymer can be enhanced in interfacial adhesion (compatibility) with other thermoplastic resins.

The other vinyl-based monomer may be the aromatic vinyl compound solely, and preferably includes at least two compounds selected from the group consisting of the aromatic vinyl compound, the cyanided vinyl compound and the maleimide-based compound. More preferably, the other vinyl-based monomer is made of the combination of the aromatic vinyl compound, and the cyanided vinyl compound and/or maleimide-based compound.

The (meth)acrylic acid ester used for forming the copolymer resin (A1) may be used in an amount of preferably 25 to 60% by weight, more preferably 26 to 55% by weight, still more preferably 28 to 45% by weight and especially preferably 31 to 41% by weight based on the total weight of the vinyl-based monomer (b) as 100% by weight. Meanwhile, the remainder of the vinyl-based monomer (b) comprises the vinyl-based monomer other than the (meth)acrylic acid ester. When the (meth)acrylic acid ester is used in a too large amount, the resultant molded product tends to be deteriorated in heat resistance and impact resistance. On the other hand, when the (meth)acrylic acid ester is used in a too small amount, the resultant molded product tends to be deteriorated in laser marking color-developing property and impact resistance.

When the aromatic vinyl compound is used as the vinyl-based monomer other than the (meth)acrylic acid ester, it may be used in an amount of preferably 5 to 75% by weight, more preferably 10 to 68% by weight based on the total weight of the vinyl-based monomer (b) as 100% by weight. When the aromatic vinyl monomer is used in the above-specified range, the obtained composition is well-balanced between moldability and impact resistance.

The cyanided vinyl compound as the vinyl-based monomer other than the (meth)acrylic acid ester may be used in an amount of preferably 1 to 40% by weight, more preferably 5 to 35% by weight based on the total weight of the vinyl-based monomer (b) as 100% by weight. When the cyanided vinyl monomer is used in the above-specified range, the obtained composition is well-balanced between moldability and chemical resistance.

The maleimide-based compound as the vinyl-based monomer other than the (meth)acrylic acid ester may be used in an amount of preferably 1 to 30% by weight, more preferably 5 to 25% by weight, still more preferably 5 to 20% by weight based on the total weight of the vinyl-based monomer (b) as 100% by weight. When the maleimide-based compound is used in a too small amount, the obtained composition tends to show a poor heat resistance. On the other hand, when the maleimide-based compound is used in a too large amount, the obtained composition tends to be deteriorated in impact resistance.

Also, the functional group-containing vinyl-based compound as the vinyl-based monomer other than the (meth)acrylic acid ester may be used in an amount of preferably 0.1 to 15% by weight, more preferably 0.5 to 12% by weight, still more preferably 1 to 10% by weight based on the total weight of the vinyl-based monomer (b) as 100% by weight. When the functional group-containing vinyl-based compound is used in an amount of less than 0.1% by weight, the obtained composition may fail to be sufficiently improved in compatibility with other resins. On the other hand, when the functional group-containing vinyl-based compound is used in an amount of more than 15% by weight, the obtained composition tends to be deteriorated in impact resistance.

The above copolymer resin (A1) used in the present invention may comprise a single kind of copolymer resin or the combination of two or more kinds of copolymer resins.

The copolymer resin (A1) can be produced by various methods such as emulsion polymerization, solution polymerization, mass polymerization and suspension polymerization. Of these methods, preferred are emulsion polymerization and solution polymerization.

When the copolymer resin (A1) is produced by emulsion polymerization method, there may be preferably used a polymerization initiator, a chain transfer agent, an emulsifier and water. Meanwhile, when adding the rubber polymer (a) and the vinyl-based monomer (b) as raw materials of the copolymer resin (A1) a whole amount of the vinyl-based monomer (b) may be simultaneously added at once and then polymerized in the presence of a whole amount of the rubber polymer (a), or the vinyl-based monomer (b) may be added continuously or in separate parts, and then polymerized in the presence of a whole amount of the rubber polymer (a). Further, the combination of these methods can also be used, and furthermore a whole or part of the rubber polymer (a) may be added during the polymerization process.

Examples of the polymerization initiator may include cumene hydroperoxide, diisopropyl benzene hydroperoxide, potassium persulfate, azobisisobutylonitrile, benzoyl peroxide, lauroyl peroxide, t-butyl peroxylaurate, t-butyl peroxymonocarbonate or the like.

Examples of the chain transfer agent may include octyl mercaptan, n-dodecyl mercaptan, t-dodecyl mercaptan, n-hexyl mercaptan, tetraethyl thiuram sulfide, acrolein, methacrolein, allyl alcohol, 2-ethylhexy thioglycol or the like.

Examples of the emulsifier used for the emulsion polymerization may include sulfuric acid esters of higher alcohols, alkylbenzenesulfonic acid salts such as sodium dodecylbenzenesulfonate, aliphatic sulfonic acid salts such as sodium laurylsulfate, higher aliphatic carboxylates, rosinates, anionic surfactants such as phosphoric acid-based surfactants, or the like.

In the emulsion polymerization, particles solidified with a coagulating agent were usually washed with water and then dried to produce particles of a rubber-reinforced vinyl-based resin. Examples of the coagulating agent may include inorganic salts such as calcium chloride, magnesium sulfate and magnesium chloride, and acids such as sulfuric acid and hydrochloric acid. Of these coagulating agents, preferred is sulfuric acid.

The copolymer resin (A1) obtained by polymerizing the above vinyl-based monomer (b) in the presence of the rubber polymer (a) contains not only a copolymer component obtained by grafting the vinyl-based monomer (b) to the rubber polymer (a), but also an ungrafted component, i.e., a (co)polymer of the vinyl-based monomer solely which is not grafted to the rubber polymer (a).

Also, the rubber-reinforced thermoplastic resin [A] used in the present invention may include the above copolymer resin (A1) alone, or may be in the form of a mixture of the copolymer resin (A1) with a (co)polymer (A2) obtained by (co)polymerizing at least one vinyl-based monomer. As the vinyl-based monomer forming the above (co)polymer (A2), the above-exemplified monomers for forming the copolymer resin (A1) may be used singly or in combination of any two or more thereof. Meanwhile, epoxy-containing monomers are excluded from the above vinyl-based monomer. That is, the above (co)polymer (A2) excludes any epoxy-containing polymers. Also, the (co)polymer (A2) may be a (co)polymer having a single composition, or in the form of a blend of two or more kinds of (co)polymers having different compositions from each other.

The above (co)polymer (A2) may be produced by emulsion polymerization method and solution polymerization method. Specifically, the (co)polymer (A2) can be produced by the same method as that for the production of the rubber-reinforced vinyl-based resin (A1) exce for using no rubber polymer (a).

In the case where the rubber-reinforced thermoplastic resin [A] is in the form of a mixture of the copolymer resin (A1) and the (co)polymer (A2), the content ratio of (A1)/(A2) is controlled such that the content of the rubber polymer (a) is 5 to 40% by weight, preferably 5 to 35% by weight, more preferably 10 to 30% by weight based on the total weight of the mixture.

The amount of the rubber polymer (a) contained in the rubber-reinforced thermoplastic resin [A] is preferably 5 to 40% by weight, more preferably 5 to 35% by weight and especially preferably 10 to 30% by weight based on the total weight of the rubber-reinforced thermoplastic resin [A], i.e., a total amount of the rubber polymer (a) and monomer units constituting the copolymer resin (A1) and the optionally added (co)polymer (A2) as 100% by weight. When the content of the rubber polymer (a) is less than 5% by weight, the resultant molded product tends to be deteriorated in impact resistance. On the other hand, when the content of the rubber polymer (a) is more than 40% by weight, the obtained composition tends to show a poor moldability, and the resultant molded product tends to be deteriorated in appearance and heat resistance.

As to the monomer units made of vinyl-based monomers, etc., which constitutes the above rubber-reinforced thermoplastic resin [A], the content of the (meth)acrylic acid ester units (b1) is preferably 25 to 60% by weight, more preferably 28 to 55% by weight, still more preferably 30 to 45% by weight and especially preferably 32 to 41% by weight based on the total weight of the rubber-reinforced thermoplastic resin [A] as 100% by weight. When the content of the (meth)acrylic acid ester units (b1) is less than 25% by weight, the resultant composition tends to be deteriorated in impact resistance and laser-marking color-developing property. On the other hand, when content of the (meth)acrylic acid ester units (b1) is more than 60% by weight, the resultant composition tends to be deteriorated in heat resistance and impact resistance.

Also, the content of the monomer units (b2) other than the (meth)acrylic acid ester units (b1) is preferably 0 to 70% by weight, more preferably 0 to 62% by weight and especially preferably 5 to 50% by weight. When the content of the monomer units (b2) is more than 70% by weight, the resultant composition tends to be deteriorated in laser-marking color-developing property.

The grafting percentage of the vinyl-based monomer (b) to the rubber polymer (a) contained in the rubber-reinforced thermoplastic resin [A] is preferably 10 to 150%, more preferably 15 to 120% and especially preferably 20 to 90%. When the grafting percentage of the vinyl-based monomer (b) to the rubber polymer (a) is less than 10%, the resultant molded product tends to be deteriorated in appearance and impact resistance. On the other hand, when the grafting percentage of the vinyl-based monomer (b) to the rubber polymer (a) is more than 150%, the resultant composition tends to be deteriorated in moldability. Meanwhile, the grafting percentage is measured by the method described in Examples below.

The limiting viscosity [η] of a methyl ethyl ketone-soluble component contained in the rubber-reinforced thermoplastic resin [A] as measured at 30°C in methyl ethyl ketone, is preferably 0.1 to 1.0 dl/g, more preferably 0.2 to 0.9 dl/g and especially preferably 0.3 to 0.7 dl/g. When the limiting viscosity [η] of the methyl ethyl ketone-soluble component is controlled to the above-specified range, the obtained composition can exhibit an excellent moldability (fluidity), and the resultant molded product is also excellent in impact resistance.

Meanwhile, the above-mentioned grafting percentage and limiting viscosity [η] can be easily controlled by varying kind and amount of the polymerization initiator, chain transfer agent, emulsifier, solvent, etc., used upon polymerization for the production of the copolymer resin (A1), etc., as well as polymerization time, polymerization temperature and concentration of the monomer components.

The rubber-reinforced thermoplastic resin [A] may be used singly, or two or more of the resins may be used in combination. Examples of the rubber-reinforced thermoplastic resin [A] may include (1) rubber-reinforced resins obtained by polymerizing the (meth)acrylic acid ester in the presence of the rubber polymer; (2) a mixture of the rubber-reinforced resin obtained by polymerizing the (meth)acrylic acid ester in the presence of the rubber polymer, and a (meth)acrylic acid ester-styrene-acrylonitrile tercopolymer; (3) a mixture of the rubber-reinforced resin obtained by polymerizing the (meth)acrylic acid ester in the presence of the rubber polymer, and an acrylonitrile-styrene resin (AS resin); and (4) a mixture of the rubber-reinforced resin obtained by polymerizing the (meth)acrylic acid ester in the presence of the rubber polymer, and a styrene-cyclohexyl maleimide-acrylonitrile-(meth)acrylic acid ester tetracopolymer.

Meanwhile, when the rubber-reinforced thermoplastic resin [A] has the above composition (3), the amount of the acrylonitrile contained in the AS resin is preferably 20 to 45% by weight, more preferably 25 to 43% by weight and especially preferably 26 to 40% by weight based on the total weight of the AS resin. When the amount of the acrylonitrile contained in the AS resin is in the above-specified range, the resultant molded product can exhibit a good chemical resistance.

In the present invention, the component [B] includes the epoxy-containing polymer (B-1), the particles (B-2) having an average particle diameter of 0.05 to 150 μm, or both the epoxy-containing polymer (B-1) and particles (B-2) having an average particle diameter of 0.05 to 150 μm.

The epoxy-containing polymer (B-1) is not particularly restricted. Examples of the epoxy-containing polymer (B-1) may include epoxylated products of 1,2-epoxy-4-vinylcyclohexane addition polymers (polymerization degree: 1 to 700) of 2,2-bis(hydroxymethyl)-1-butanol, vinylcyclohexene dioxide, ethylene oxide, propylene oxide, 1,2-butylene oxide, 2,3-epoxy-1-propanol, 2,3-epoxypropionaldehyde, phenyl glycidyl ether, resorcin diglycidyl ether, bioxirane, epichlorohydrin, dieldrin, endrin, heptachloroepoxide, an addition reaction product of a polycondensate (having mercapto end groups) of 1,1'-methylenedioxybis(2-chloroethane), 1,2,3-trichloropropane and polysodium sulfide with an addition polymer (having 2,3-epoxypropyl end groups) of 4,4'-isopropylidenediphenol, 1-chloro-2,3-epoxypropane, 1,6-bis (2,3-epoxypropoxy)naphthalene, a reaction product of a polycondensate or a polycondensed hydrolysis product of 3-(2-aminoethylamino)propyltrimethoxy(or chloro)silane, dimethoxy(or chloro)dimethylsilane, dimethoxy(or chloro) diphenylsilane, trimethoxy(or chloro)methylsilane and trimethoxy(or chloro)phenylsilane with 2,3-epoxypropyl methacrylate, α-2, 3-epoxypropoxyphenyl-ω-hydropoly(n=1 to 7)-2-{(2,3-epoxypropoxy) benzylidene-2,3-epoxypropoxyphenylene], cyclohexene oxide, 3,4-epoxy-1-butene, 3-bromo-1,2-epoxypropane, 3,3,3-trifluoro-1,2-epoxypropane, 3,4-epoxy-6-methylcyclohexylmethyl-3,4-epoxy-6-methylcyclohexanecarboxylate, glycidyl oleate, 9,10-epoxy stearic acid (cis)(1RS, 2SR, 4SR)-1,4-epoxy-p-menthan-2-yl 2-methyl benzyl ether, a polycondensate of 1,1'-biphenyl-4,4'-diol and 1-chloro-2,3-epoxypropane, styrene-copolymerized epoxy resins, glycidyl-styrene copolymer resins, methacrylic acid-copolymerized epoxy resins, glycidyl methacrylate-styrene-copolymerized epoxy resins, glycidyl methacrylate-styrene-acrylonitrile-copolymerized epoxy resins or the like. Of these epoxy-containing polymers, preferred are copolymers of an epoxy-containing unsaturated compound and a vinyl-based monomer such as styrene-copolymerized epoxy resins, glycidyl methacrylate-styrene-copolymerized epoxy resins and glycidyl methacrylate-styrene-acrylonitrile-copolymerized epoxy resins. These epoxy-containing polymers may be used singly or in combination of any two or more thereof. Examples of the epoxy-containing unsaturated compound may include glycidyl acrylate, glycidyl methacrylate, allyl glycidyl ether or the like. Examples of the vinyl-based monomer may include aromatic vinyl compounds, cyanided vinyl compounds, (meth)acrylic acid esters, maleimide-based compounds or the like. Examples of the copolymers of the epoxy-containing unsaturated compound and the vinyl-based monomer exemplified as the preferred epoxy-containing polymer may include copolymers of epoxy-containing compound with (meth)acrylic acid ester, copolymers of epoxy-containing compound, aromatic vinyl compound and cyanided vinyl compound, or the like.

The content of the monomer units made of the epoxy-containing unsaturated compound constituting the epoxy-containing polymer (B-1) is preferably 3 to 70% by weight, more preferably 5 to 60% by weight. When the content of the monomer units made of the epoxy-containing unsaturated compound is in the above-specified range, it is possible to attain the excellent effect of the present invention.

The limiting viscosity [η] of the epoxy-containing polymer (B-1) as measured at 30°C in methyl ethyl ketone is preferably 0.1 to 1 dl/g, more preferably 0.15 to 0.8 dl/g.

The particles (B-2) are not particularly restricted as long as the average particle diameter thereof is within the range of 0.05 to 150 μm. In particular, those particles capable of maintaining a shape thereof upon molding the composition are preferred. Further, those particles that are not easily decomposed by irradiation of laser and maintain their shape in the molded product are more preferred. Meanwhile, the shape of the particles may be out of a complete spherical shape as long as the average value of major axis diameters and minor axis diameters is within the above-specified range. Examples of the particles (B-2) may include inorganic particles, organic particles and inorganic organic composite particles.

Specific examples of the inorganic particles may include particles of calcium phosphate, calcium carbonate, silica, alumina, talc, titanium dioxide, magnesium oxide, barium sulfate or compounds containing these materials as main components, or the like. Specific examples of the organic particles may include polystyrene-based cross-linked particles, divinyl benzene-based cross-linked particles, polymethyl methacrylate-based cross-linked particles, styrene-methyl methacrylate-based cross-linked particles, particles made of inorganic salts of higher fatty acids, or the like. Also, specific examples of the inorganic organic composite particles may include particles obtained by dispersing inorganic substances such as silica and alumina within polymers, particles obtained by absorbing polymers on the surface of fine particles such as silica, or the like. These particles may be used singly or in combination of any two or more thereof.

The particles (B-2) contains the above materials as main components in an amount of preferably not less than 50% by weight, more preferably not less than 60% by weight.

Meanwhile, the particles (B-2) are not particularly restricted to the components exemplified above, and may further contain the following additives in order to accomplish the objects of the present invention.

The particles (B-2) may also contain such a component capable of forming fine particles having the above-specified average particle diameter by heat applied upon molding the thermoplastic resin composition of the present invention. Examples of the fine particle-forming component may include silicone oil, thermosetting polymer particles or the like. The silicone oil is not particularly restricted. Examples of the silicone oil may include dimethyl silicone oil, methylphenyl silicone oil, methyl hydrogen silicone oil, modified silicone oils or the like. The molecular weight, etc., of the silicone oil are also not particularly restricted.

Meanwhile, the thus formed particles preferably have a softening point of not less than 100°C. Further, the particles may contain a component capable of forming fine particles by irradiation of laser during the laser marking process.

The particles (B-2) have an average particle diameter of 0.05 to 150 μm, preferably 0.1 to 100 μm, more preferably 0.2 to 70 μm, still more preferably 0.25 to 60 μm. When the average particle diameter of the particles (B-2) is too small, the resultant composition tends to be deteriorated in laser marking durability. On the other hand, when the average particle diameter of the particles (B-2) is too large, the resultant composition tends to be deteriorated in impact resistance.

As described above, the particles (B-2) may contain two or more different kinds of components. In this case, the average particle diameter of whole particles made of the different components is preferably within the above-specified range. More preferably, the average particle diameter of the particles made of each component is within the above-specified range.

The content of the epoxy-containing polymer (B-1) is preferably 0.1 to 10 parts by weight, more preferably 0.3 to 8 parts by weight, still more preferably 0.5 to 7 parts by weight based on 100 parts by weight of the rubber-reinforced thermoplastic resin [A]. When the content of the epoxy-containing polymer (B-1) is too small, the resultant composition tends to be deteriorated in the effect of present invention, especially laser marking durability. On the other hand, when the content of the epoxy-containing polymer (B-1) is too large, the resultant molded product tends to show a poor effect of the present invention, especially, poor moldability, appearance of molded product and impact resistance.

The content of the particles (B-2) is preferably 0.1 to 10 parts by weight, more preferably 0.3 to 8 parts by weight, still more preferably 0.5 to 7 parts by weight based on 100 parts by weight of the rubber-reinforced thermoplastic resin [A]. When the content of the particles (B-2) is too small, the resultant composition tends to be deteriorated in laser marking durability. On the other hand, when the content of the particles (B-2) is too large, the resultant composition tends to be deteriorated in impact resistance.

As the black substance [C], there may be used any dyes, pigments, etc., as long as they show a reflectance of not more than 10%, preferably not more than 5% over a whole range of 400 to 700 nm as observed in a wavelength-reflectance curve thereof. That is, the black substance [C] is preferably such a material capable of absorbing light having a wavelength over a whole range of from 400 to 700 nm. Examples of the black substance [C] may include carbon black, black iron oxide, titanium black, graphite or the like. These black substances may be used singly or in combination of any two or more thereof.

Specific examples of the carbon black may include acetylene black, channel black, furnace black, koechen black or the like. The particle diameter of the carbon black is preferably 10 to 80 nm, more preferably 12 to 40 nm. The carbon black having a smaller particle diameter can exhibit a more excellent dispersion in resins, and can provide a composition having a more excellent laser-marking color-developing property. The carbon black preferably has a specific surface area of 20 to 1,500 $m^2$/g, an oil absorption of 35 to 300 ml/100g, and a pH value of 2 to 10.

The above black iron oxide is generally an iron oxide represented by the formula: $Fe_3O_4$ or $FeO \cdot Fe_2O_3$. The particle diameter of the black iron oxide is preferably 0.3 to 0.8 μm, more preferably 0.4 to 0.6 μm. The shape of the black iron oxide may be of any suitable shape such as spherical shape, cubic shape and acicular shape. Of these particles, preferred are particles having a cubic shape.

The above titanium black is a compound obtained by reducing titanium dioxide. The particle diameter of the titanium black is preferably 0.1 to 60 μm, more preferably 1 to 20 μm.

The content of the black substance [C] is preferably 0.01 to 5 parts by weight, more preferably 0.02 to 3 parts by weight, still more preferably 0.03 to 2 parts by weight and especially preferably 0.05 to 1 part by weight based on 100 parts by weight of a total amount of the rubber-reinforced thermoplastic resin [A] and the epoxy-containing polymer (B-1), i.e., 100 parts by weight of the whole polymer components. When the content of the black substance [C] is too small, the resultant composition tends to be deteriorated in laser-marking color-developing property. On the other hand, when the content of the black substance [C] is too large, the resultant composition tends to be deteriorated in laser-marking color-developing property, and the molded product obtained therefrom tends to be deteriorated in impact resistance.

The laser-marking thermoplastic resin composition of the present invention may further contain a thermoplastic resin [D] having a melting point of 150 to 300°C. However, the thermoplastic resin [D] excludes those resins belonging to the rubber-reinforced thermoplastic resin [A] and the epoxy-containing polymer (B-1). The thermoplastic resin composition containing the thermoplastic resin [D] can provide a molded product that is further enhanced in durability and recognizability of the laser markings formed thereon.

The thermoplastic resin [D] having the above-specified melting point can be easily alloyed with the above components [A], [B] and [C]. The melting point of the thermoplastic resin [D] is preferably 180 to 280°C, more preferably 200 to 240°C.

The thermoplastic resin [D] is not particularly restricted. Examples of the thermoplastic resin [D] may include polyester-based resins, polyacetal resins, polyolefin-based resins such as PE and PP, or the like. Of these resins, preferred are polyester-based resins. These thermoplastic resins may be used singly or in combination of any two or more thereof.

Specific examples of the polyester-based resins may include polyethylene terephthalate, polybutylene terephthalate, polyethylene naphthalate, polymers containing units composed of different kinds of diols and carboxylic acids, or the like.

The typical polyethylene terephthalate contains ethylene terephthalate units in an amount of not less than 80 mol%. When the content of the ethylene terephthalate units is less than 80 mol%, the resultant molded product tends to be deteriorated in mechanical properties, especially impact resistance.

Examples of the diol components other than ethylene glycol used as raw material of the polyester-based resins may include trimethylene glycol, tetramethylene glycol, hexamethylene glycol, decamethylene glycol, neopentyl glycol, diethylene glycol, 1,1-cyclohexane dimethylol, 1,4- and 1,3-cyclohexane dimethylol, 2,2-bis(4'-β-hydroxyethoxyphenyl) propane, bis(4'-β-hydroxyethoxyphenyl) sulfonic acid or the like.

Examples of the dicarboxylic acid components other than terephthalic acid as a raw material of the polyester-based resins may include aromatic dicarboxylic acids such as isophthalic acid, naphthalene dicarboxylic acid, diphenyl dicarboxylic acid, diphenoxyethane dicarboxylic acid, diphenyl ether dicarboxylic acid and diphenylsulfone dicarboxylic acid; alicyclic dicarboxylic acids such as hexahydroterephthalic acid and hexahydroisophthalic acid; aliphatic dicarboxylic acids such as adipic acid, sebacic acid and azelaic acid; oxy acids such as p-β-hydroxyethoxybenzoic acid; or the like.

The polyethylene terephthalate preferably contains ethylene terephthalate repeating units in an amount of not less than 97 mol% based on whole repeating units thereof.

Also, the polyethylene terephthalate usually contains impurities due to catalysts used for the production thereof, for example, metal elements such as manganese, magnesium, cobalt, zinc, antimony, germanium and titanium as well as impurities due to stabilizers such as phosphorus. The polyethylene terephthalate usable in the laser-marking thermoplastic resin composition of the present invention is preferably produced using antimony or germanium as a polycondensation catalyst in view of color tone and heat stability of the obtained molded product.

The intrinsic viscosity of the polyethylene terephthalate is usually 0.60 to 1.3 dl/g, preferably 0.65 to 1.10 dl/g. When the intrinsic viscosity of the polyethylene terephthalate is less than 0.60 dl/g, the resultant molded product tends to be deteriorated in mechanical properties, especially impact resistance. On the other hand, when the intrinsic viscosity of the polyethylene terephthalate is more than 1.30 dl/g, the resultant composition tends to be deteriorated in moldability.

The polybutylene terephthalate is a polymer containing butylene terephthalate units obtained by polycondensing 1,4-butylene glycol with terephthalic acid or a derivative thereof, and may also be a copolymer obtained by replacing a part of terephthalic acid or 1,4-butylene glycol of the polybutylene terephthalate with the other copolymerizable monomer component. Examples of the other copolymerizable monomer component may include dicarboxylic acids such as isophthalic acid, naphthalenedicarboxylic acid, 4,4'-diphenoxyethanedicarboxylic acid, adipic acid, sebacic acid, cyclohexanedicarboxylic acid; and glycols such as ethylene glycol, tirmethylene glycol, hexamethylene glycol, polyethylene glycol, polypropylene glycol, polytetramethylene glycol and a copolyglycol of polyethylene glycol and polypropylene glycol. The content of the monomer units made of the copolymerizable monomer components is preferably less than 30 mol% based on the whole polymer.

The polybutylene terephthalate usable in the laser-marking thermoplastic resin composition of the present invention has an intrinsic viscosity of preferably 0.5 to 1.3 dl/g, more preferably 0.6 to 0.8 dl/g as measured at 30°C in a mixed solvent containing phenol and tetrachloroethane at a weight ratio of 1:1.

The above polyethylene naphthalate preferably contains ethylene naphthalate units in an amount of not less than 80 mol% based on whole repeating units thereof. When the content of the ethylene naphthalate units is less than 80 mol%/, the obtained molded product tends to be deteriorated in mechanical properties, especially impact resistance.

The polyethylene naphthalate is a polycondensate of a dicarboxylic acid component composed mainly of 2,6-naphthalenedicarboxylic acid or an alkyl ester thereof (having about 1 to 4 carbon atoms) and a glycol component composed mainly of ethylene glycol.

Examples of the dicarboxylic acid component other than 2,6-naphthalenedicarboxylic acid or its alkyl ester may include aromatic dicarboxylic acids such as phthalic acid, terephthalic acid, isophthalic acid, 4,4'-diphenyldicarboxylic acid, 4,4'-diphenoxyethanedicarboxylic acid, 4,4'-diphenyl ether dicarboxylic acid and 4,4'-diphenylsulfonedicarboxylic acid; alicyclic dicarboxylic acids such as hexahydroterephthalic acid and hexahydroisophthalic acid; aliphatic dicarboxylic acids such as malonic acid, succinic acid, adipic acid, azelaic acid and sebacic acid; or the like.

Examples of the glycol component other than ethylene glycol may include aliphatic glycols such as propylene glycol, trimethylene glycol, tetramethylene glycol, pentamethylene glycol, hexamethylene glycol, decamethylene glycol, neopentyl glycol and diethylene glycol; alicyclic glycols such as 1,1-cyclohexanedimethylol and 1,4-cyclohexanedimethylol; aromatic glycols such as 4,4'-dihydroxybiphenyl, 2, 2-bis (4'-hydroxyphenyl)propane, 2, 2-bis (4'-$\beta$-hydroxyethoxyphenyl)propane, bis(4-hydroxyphenyl)sulfone and bis(4-$\beta$-hydroxyethoxyphenyl)sulfonic acid; or the like.

Further, the dicarboxylic acid and glycol components of the polyethylene naphthalate may be copolymerized with hydroxydicarboxylic acid such as p-hydroxybenzoic acid and p-$\beta$-hydroxyethoxybenzoic acid, alkoxycarboxylic acids or the like.

The above polyethylene naphthalate may be produced, for example, by the following method. That is, the raw materials including the dicarboxylic acid component mainly comprising 2,6-naphthalenedicarboxylic acid or its alkyl ester and the glycol component mainly comprising ethylene glycol are esterified or transesterified in the presence of an esterification catalyst or a transesterification catalyst made of a metal compound such as a manganese compound at a temperature of 200 to 280°C under a pressure of 1 to 3 kg/cm$^2$ by an ordinary method. Thereafter, the obtained ester is transformed into bis($\beta$-hydroxyethyl)naphthalenedicarboxylate and/or its oligomer, and then melt-polycondensed in the presence of a polycondensation catalyst including a metal compound such as cobalt and antimony compounds and a stabilizer including a phosphorus compound such as phosphoric acid at a temperature of 250 to 300°C under a pressure of 500 to 0.1 mmHg. Next, the polymer obtained by the above melt-polycondensation is usually heated at a temperature of 120 to 200°C for not less than one minute to conduct a precrystallization thereof, and then subjected to solid phase polymerization in an inert gas atmosphere such as nitrogen at a temperature of 190 to 230°C under a pressure of 1 kg/cm$^2$ to 10 mmHg for 1 to 50 hours, thereby obtaining polyethylene naphthalate.

When the laser-marking thermoplastic resin composition of the present invention further contains the thermoplastic resin [D] in addition to the rubber-reinforced thermoplastic resin [A], the epoxy-containing polymer (B-1) and the black substance [C], the contents of the respective components are defined by the following formulae:

$$[A] + (B-1) + [D] = 100 \text{ (\% by weight)}$$

$$0 < (B-1) \leq 10 \text{ (\% by weight)}$$

$$0 < [D] \leq 10 \text{ (\% by weight)}$$

$$0.01 \leq [C]/([A] + (B-1) + [D]) \leq 5$$

More specifically, the content of the rubber-reinforced thermoplastic resin [A] is preferably from 80 to less than 100 parts by weight, more preferably 87 to 98.9 parts by weight, still more preferably 90 to 96.7 parts by weight; the content of the epoxy-containing polymer (B-1) is preferably from more than 0 to 10 parts by weight, more preferably 0.1 to 8 parts by weight, still more preferably 0.3 to 6 parts by weight; and the content of the thermoplastic resin [D] is preferably from more than 0 to 10 parts by weight, more preferably 0.3 to 8 parts by weight, still more preferably 0.5 to 7 parts by weight, all based on 100 parts by weight of a total amount of the rubber-reinforced thermoplastic resin [A], the epoxy-containing polymer (B-1) and the thermoplastic resin [D]. When the content of the epoxy-containing compound (B-1) is too small, the obtained composition tends to be deteriorated in durability and recognizability of the laser markings formed. On the other hand, when the content of the epoxy-containing compound (B-1) is too large, the obtained molded product tends to show a poor appearance. Also, when the content of the thermoplastic resin [D] is too small, the obtained composition tends to be deteriorated in durability and recognizability of the laser markings formed. On the other hand, when the content of the thermoplastic resin [D] is too large, the obtained composition tends to be deteriorated in heat resistance.

When the composition contains the thermoplastic resin [D], the content of the black substance [C] is preferably 0.01 to 5 parts by weight, more preferably 0.02 to 3 parts by weight, still more preferably 0.03 to 2 parts by weight and especially preferably 0.05 to 1 part by weight based on 100 parts by weight of a total amount of the rubber-reinforced thermoplastic resin [A], the epoxy-containing polymer (B-1) and the thermoplastic resin [D]. When the content of the black substance [C] is too small, the obtained composition tends to be deteriorated in laser-marking color-developing property. On the other hand, when the content of the black substance [C] is too large, the obtained composition tends to be deteriorated in laser-marking color-developing property, and the molded product obtained therefrom tends to be deteriorated in impact resistance.

The laser-marking thermoplastic resin composition of the present invention may further contain various additives according to objects and applications thereof. Examples of the additives may include colorants, fillers, anti-weathering agents, antistatic agents, flame retardants, flame-retarding assistants, antioxidants, plasticizers, lubricants, coupling agents, silicone oils or the like.

The colorants are used to develop a laser-marking chromatic color upon irradiation of laser. As the colorants, dyes, pigments, etc., may be used singly or in combination of any two or more thereof. The colorants preferably has such a wavelength-reflection curve in which the reflectance in a part of a wavelength range of 400 to 700 nm is not less than 40%, preferably not less than 50%. When the colorant is appropriately selected from these dyes and organic pigments, the obtained composition can clearly develop the chromatic color such as red, yellow, blue, green and violet colors.

Examples of the dyes may include nitroso-based dyes, nitro-based dyes, azo-based dyes, stilbene-azo-based dyes, keto-imine-based dyes, triphenylmethane-based dyes, xathene-based dyes, acridine-based dyes, quinoline-based dyes, methine-based dyes, thiazole-based dyes, indamine-based dyes, azine-based dyes, oxazine-based dyes, thiazine-based dyes, sulfide-based dyes, aminoketone-based dyes, anthraquinone-based dyes, indigoid-based dyes or the like.

Specific examples of the dyes may include Mordant Green 4, Disperse Yellow 14, Disperse Yellow 31, Acid Yellow 2, Direct Yellow 59, Basic Yellow 2, Basic Orange 23, Direct Orange 71, Direct Red 28, Acid Red 52, Solvent Blue 22, Acid Blue 59, Mordant Blue 10, Acid Blue 45, Vat Blue 41, Toluidine Maroon, Permanent Red AG, Hanza Yellow G, Hanza Yellow 10G, Benzidine Orange 2G or the like.

Examples of. the organic pigments may include monoazo-based, condensed azo-based, disazo-based, anthraquinone-based, isoindolinone-based, heterocyclic-based, perynone-based, azomethine-based, quinacridon-based, perylene-based, dioxazine-based, phthalocyanine-based pigments, etc. Also, there may be suitably used organic pigments coordinated with metal such as calcium, nickel, iron, barium, sodium, copper, molybdenum, cobalt, manganese, zinc, titanium, magnesium and potassium. Specific examples of such organic pigments coordinated with metal may include watching red (Ca), green gold (Ni), pigment green B (Fe), pigment scarlet 3B (Ba), fast sky blue (Ba), phthalocyanine green (Fe), phthalocyanine blue (Cu), brilliant carmine 6B (Ca), bordeaux 10B (Na), lithol red R (Na), lake red C (Ba), lake red D (Ba), brilliant scarlet G (Ca), manganese violet (Mn), cobalt violet (Co) or the like. Meanwhile, the symbols in parentheses indicate metal elements contained in the respective organic pigments.

Examples of the inorganic pigments may include titanium oxide, titanium yellow, zinc oxide, barium sulfide, zinc sulfide, iron oxide, composite oxide-based pigments, ultramarine blue, cobalt blue or the like.

These dyes and pigments may be used singly or in combination of any two or more thereof.

The content of the colorant is preferably 0.01 to 5 parts by weight, more preferably 0.05 to 2 parts by weight, still more preferably 0.1 to 1 part by weight based on 100 parts by weight of a total amount of the rubber-reinforced thermoplastic resin [A], the epoxy-containing polymer (B-1) and the thermoplastic resin [D].

Examples of the filler may include glass fibers, carbon fibers, glass beads, wollastonite, rock filler, calcium carbonate, talc, mica, glass flakes, milled fibers, barium sulfate, molybdenum disulfide, magnesium oxide, zinc oxide whiskers, calcium titanate whiskers or the like. These fillers may be used singly or in combination of any two or more thereof. When the filler is blended in the laser-marking thermoplastic resin composition of the present invention, the molded product obtained therefrom can exhibit a good rigidity, a good heat resistance (resistance to high heat deflection temperature) or the like.

The fibrous fillers such as glass fibers and carbon fibers preferably have a fiber diameter of 6 to 20 $\mu$m and a fiber length of not less than 30 $\mu$m. Among the above fillers, when talc or calcium carbonate is blended in the composition, it is possible to obtain a molded product exhibiting a good delustering property.

The content of the filler is preferably 1 to 50 parts by weight, more preferably 2 to 30 parts by weight based on 100 parts by weight of a total amount of the rubber-reinforced thermoplastic resin [A], the epoxy-containing polymer (B-1) and the thermoplastic resin [D]. When the content of the filler blended is too large, the obtained composition tends to be deteriorated in laser-marking property.

Examples of the anti-weathering agent may include organic phosphorus-based compounds, organic sulfur-based compounds, hydroxyl-containing organic compounds or the like. These anti-weathering agents may be used singly or in combination of any two or more thereof. The content of the anti-weathering agent blended is preferably 0.1 to 10 parts by weight, more preferably 0.5 to 5 parts by weight based on 100 parts by weight of a total amount of the rubber-reinforced thermoplastic resin [A], the epoxy-containing polymer (B-1) and the thermoplastic resin [D], i.e., based on 100 parts by weight of the whole polymers.

Examples of the antistatic agent may include sulfonates containing polyether groups or alkyl groups, or the like. These antistatic agents may be used singly or in combination of any two or more thereof. The content of the antistatic agent blended is preferably 0.1 to 10 parts by weight, more preferably 0.5 to 5 parts by weight based on 100 parts by weight of a total amount of the rubber-reinforced thermoplastic resin [A], the epoxy-containing polymer (B-1) and the thermoplastic resin [D], i.e., based on 100 parts by weight of the whole polymers.

Examples of the flame retardant may include halogen-based flame retardants, organophosphorus-based flame retardants, nitrogen-containing compounds, metal hydroxides, antimony compounds or the like.

Specific examples of the halogen-based flame retardants may include oligomers of tetrabromobisphenol A whose end epoxy groups may or may not be sealed with tribromophenol, methyl alcohol, ethyl alcohol, etc., brominated styrene, post-brominated styrene, oligomers of brominated polycarbonates, tetrabromobisphenol A, decabromodiphenyl ether, chlorinated polystyrene, aliphatic chlorine compounds or the like. Of these halogen-based flame retardants, preferred are oligomers of tetrabromobisphenol A, and the molecular weight of the oligomers is preferably 1,000 to 6,000. When the halogen contained in the halogen-based flame retardants is bromine, the bromine concentration is preferably 30 to 65% by weight, more preferably 45 to 60% by weight.

Examples of the organophosphorus-based flame retardants may include triphenyl phosphate, trixylenyl phosphate, tricresyl phosphate, trixylenyl thiophosphate, hydroquinone bis(diphenylphosphate), resorcinol bis(diphenylphosphate), resorcinol bis(dixylenylphosphate), oligomers of triphenyl phosphate or the like. Of these organophosphorus-based flame retardants, preferred are triphenyl phosphate, trixylenyl phosphate and resorcinol bis(dixylenylphosphate). Also, the phosphorus concentration in the organophosphorus-based flame retardants is preferably 4 to 30% by weight, more preferably 6 to 25% by weight.

Examples of the above nitrogen-containing compounds may include melamine, cyclized isocyanates or the like. Examples of the above antimony compounds may include antimony trioxide, antimony pentaoxide, colloidal antimony pentaoxide or the like. Examples of the metal hydroxides may include magnesium hydroxide, aluminum hydroxide or the like.

The content of the flame retardant blended is preferably 1 to 50 parts by weight, more preferably 2 to 30 parts by weight and especially preferably 5 to 25 parts by weight based on 100 parts by weight of a total amount of the rubber-reinforced thermoplastic resin [A], the epoxy-containing polymer (B-1) and the thermoplastic resin [D], i.e., based on 100 parts by weight of the whole polymers. When the content of the flame retardant blended is less than 1 part by weight, the obtained composition may fail to be sufficiently improved in flame retardancy. On the other hand, when the content of the flame retardant blended is more than 50 parts by weight, the obtained composition tends to be deteriorated in impact resistance and laser-marking property.

Further, the laser-marking thermoplastic resin composition of the present invention may also contain the other thermoplastic resins, thermoplastic elastomers and thermosetting resins, etc., according to required properties and applications thereof. Examples of the other thermoplastic resins, thermoplastic elastomers and thermosetting resins may include polycarbonates, polyethylene, polypropylene, polyesters, polysulfones, polyether sulfones, polyphenylene sulfide, liquid crystal polymers, polyvinylidene fluoride, polytetrafluoroethylene, styrene-vinylidene acetate copolymer, polyether ester amides, polyamide elastomers, polyamide imide elastomers, polyester elastomers or the like. These resins or elastomers may be used singly or in combination of any two or more thereof.

Among these other thermoplastic resins, thermoplastic elastomers and thermosetting resins, when polyethylene, polypropylene, polyamides, etc., are blended in the thermoplastic resin composition of the present invention, it is possible to impart an excellent laser-marking color-developing property thereto. In this case, the content of the resins or elastomers is preferably 1 to 50 parts by weight, more preferably 5 to 50 parts by weight based on 100 parts by weight of a total amount of the rubber-reinforced thermoplastic resin [A], the epoxy-containing polymer (B-1) and the thermoplastic resin [D].

Also, among these other thermoplastic resins, thermoplastic elastomers and thermosetting resins, when polyamide elastomers, polyether ester amides, etc., are blended in the thermoplastic resin composition of the present invention, it is possible to impart a permanent electrification property thereto. In this case, the content of these polymers is preferably 0.1 to 30 parts by weight, more preferably 1 to 20 parts by weight based on 100 parts by weight of a total amount of the rubber-reinforced thermoplastic resin [A], the epoxy-containing polymer (B-1) and the thermoplastic resin [D].

The laser-marking thermoplastic resin composition of the present invention can be produced by kneading the respective components together using various extruders, Banbury mixer, kneader, rolls, feeder ruder, etc., and is preferably produced using a twin-screw extruder. The respective components may be kneaded simultaneously at once or while intermittently adding in several divided parts.

The laser-marking thermoplastic resin composition of the present invention can be formed into various molded products such as housings of apparatuses such as office automation (OA) devices, domestic appliances, automotive interior trims and car navigation devices and housings of audio and visual devices such as CD players and MD players as well as various buttons, various switches. various housings, chassises, trays, etc., by various methods such as injection-molding, sheet extrusion, vacuum forming, profile extrusion, foam molding, injection pressing, press molding, blow molding, etc.

The molded product produced from the laser-marking thermoplastic resin composition of the present invention exhibits a heat deflection temperature (HDT) of preferably not less than 87°C, more preferably not less than 89°C and especially preferably not less than 91°C as measured according to ASTM D648.

The thus obtained molded product can be provided with marks having a clear white color or a chromatic color by irradiating a laser onto the surface thereof. As the laser, there may be used gas lasers such as He-Ne laser, Ar laser, $CO_2$ laser and excimer laser, solid lasers such as YAG laser, semiconductor laser, dye laser or the like. Of these lasers, preferred are $CO_2$ laser, excimer laser and YAG laser. The YAG laser has a wavelength of 1,054 nm.

The printed portions color-developed by the laser-marking method are more excellent in anti-weathering property and wear resistance than those formed by ordinary printing methods and, therefore, can exhibit a higher practical applicability.

The mechanism of the color-developing phenomenon as observed when the molded product produced from the laser-marking thermoplastic resin composition of the present invention is irradiated with laser, is considered as follows, though not clearly known. That is, the black substance such as carbon contained in the molded product absorbs the laser ray irradiated, and is vaporized from laser-irradiated portions. As a result, the black-substance is eliminated or lessened at the irradiated portions. If no colorant is contained in the composition prepared before the molding, the laser-irradiated portions usually develop a white color. Whereas, when dyes, pigments, etc., exhibiting any chromatic color are contained in the composition, the irradiated laser is not absorbed thereby, and the dyes, pigments, etc., still remain at the laser-irradiated portions, so that the chromatic color due to the dyes, pigments, etc., is developed thereon.

Alternative mechanism of the color development is considered as follows. That is, the'laser irradiated to and absorbed by the black substance is converted into heat which then allows the (meth)acrylic acid ester component contained in the molded product to be decomposed and foamed. The foamed portions have a different reflectance from that of laser-unirradiated portions and, as a result, exhibit not black color but chromatic color due to the dyes, pigments, etc.

In such a foaming phenomenon, the foamed portions of the molded product tend to be swelled up as compared to the laser-unirradiated portions, though the swelling degree varies depending upon wavelength and output power of the laser. The height of the swelled portions of the molded product is usually in the range of 1 to 100 µm. If the height of the swelled portions is from 1 to 80 µm, it becomes possible to more clearly recognize the laser-marking color-developed portions, i.e., laser-irradiated (printed) portions. The height of the foamed portions can also be used for producing braille products. Meanwhile, the irradiated laser may also cause the surface layer portion of the molded product to be foamed. In this case, the depth of the foamed surface layer portion is about 10 to 200 µm.

When the laser-irradiated portions of the molded product are swelled, the particles (B-2) contained in the laser-marking thermoplastic resin composition of the present invention are caused to enter into voids formed by the foaming or inside of the surface portion of the molded product. As a result, the swelled portions, especially the surface layer portions thereof, are prevented from undergoing reduction of density. In addition, since the hardness of the foamed portions is enhanced by inclusion of the epoxy-containing polymer, white characters or marks formed on keys of a keyboard are free from surface break by key touches and, therefore, can be kept clearly recognizable.

Thus, the laser-marking thermoplastic resin composition of the present invention can provide a molded product capable of not only exhibiting excellent heat resistance and impact resistance, but also forming clear, highly recognizable marks thereon by irradiation of laser. In particular, when the particles having an average particle diameter of 0.05 to 150 µm and/or the epoxy-containing polymer are incorporated into the composition, it is possible to produce the molded product having an excellent laser-marking property.

EXAMPLES

The present invention is described in more detail by the following Examples, but these Examples are only illustrative and, therefore, not intended to limit the scope of the present invention thereto. Meanwhile, in the following Examples and Comparative Examples, "part" and "%" represent "part by weight" and "% by weight", respectively, unless otherwise specified. Further, various properties were measured and evaluated by the following methods.

(1) Average particle diameter of rubber polymer:

The diameters of particles dispersed in latex were measured by light scattering method. The measurement was conducted by cumulant method (integration: 70 times) using a measuring apparatus "LPA-3100" manufactured by Otsuka Electronics Co., Ltd. Meanwhile, it was confirmed that the diameters of rubber polymer particles dispersed in resins were identical to those of the rubber polymer particles dispersed in latex as previously synthesized in an emulsified form.

(2) Grafting percentage of rubber-reinforced thermoplastic resin [A1]:

1 g of a test sample was accurately weighed and added to methyl ethyl ketone. Thereafter, the resultant mixture was shaken for 2 hours using a shaker to dissolve the liberated (co)polymer therein. Then, the obtained solution was centrifuged at 15,000 rpm for 30 minutes using a centrifugal separator to separate insoluble components therefrom. The thus separated insoluble components were vacuum-dried at 120°C for one hour to obtain solids. The grafting percentage was calculated form the following formula:

$$\text{Grafting Percentage} = \{(y - x)/x\} \times 100$$

wherein x is a weight (g) of rubber components contained in 1 g of the test sample; and y is a weight (g) of the methyl ethyl ketone-insoluble components.

(3) Limiting viscosity:

The soluble components obtained above were dissolved in methyl ethyl ketone, and the limiting viscosity (unit: dl/g) of the obtained solution was measured at 30°C using an Ubbellohde viscometer.

(4) Intrinsic viscosity:

Measured in a mixed solvent comprising phenol and tetrachloroethane at a weight ratio of 1:1 at 30°C.

(5) Appearance of molded product:

The composition obtained by blending the respective components together were molded using an injection-molding machine to obtain a plate-shaped molded product having a size of 40 mm in length, 100 mm in width and 2.5 mm in thickness. The appearance of the thus obtained molded product was visually observed. The results were evaluated according to the following ratings.
A: Good
C: Poor (any defective appearance occurred)

(6) Impact resistance:

The plate-shaped molded product obtained in the above (5) was used as a test specimen. A load of 200 gf was dropped from a height of 40 cm on the test specimen using a DuPont impact tester to measure its impact strength. The results were evaluated according to the following ratings.
        A: Not broken and no problem upon practical use
        C: Broken with possibility of causing any problems

(7) Evaluation of laser-marking property:

The surface of the above-obtained plate-shaped molded product was irradiated with laser using a laser marker "Star Mark 65W" (YAG laser) manufactured by Carl Barssel Co., Ltd. The color-developing property, recognizability and clearness of the portions color-developed by the irradiation of laser were visually observed and evaluated according to the following ratings.
        A: Good (developed marks with good clearness and recognizability)
        B: Slightly deteriorated in recognizability and clearness
        C: Poor; extremely deteriorated in recognizability and clearness

(8) Evaluation of durability test of laser-marked surface

The above laser-marked molded product was subjected to a keying test in which a keying load of 2 kg was applied onto its laser-marked surface (30 mm in length and 30 mm in width), and the keying operation was repeated 1,000,000 times. After the keying test, the laser-marked surface was visually observed to evaluate its appearance according to the following ratings.
        A: Good
        B: Not poor (no problem upon practical use)

C: Poor (deteriorated in clearness and recognizability, and any problem upon practical use)

In Examples and Comparative Examples, there were used the following raw materials.

[A] Rubber-reinforced thermoplastic resin:

(1) Copolymer (A11): Prepared by the method shown in the following Production Example 1.
(2) Copolymer (A12): Prepared by the method shown in the following Production Example 2.
(3) Copolymer (A21): Styrene-acrylonitrile copolymer [polymerization ratio: 75/25(%)]; limited viscosity: 0.5 dl/g

[B] component:

Epoxy-containing polymer (B-1):

(1) B11: Tradename "BLENMER-CP-50M" produced by NOF Corporation; softening point: 100 to 110°C
(2) B12: Tradename "BLENMER-CP-50S" produced by NOF Corporation; softening point: 110°C
(3) B13: Tradename "MARBROOF G1005SA" produced by NOF Corporation; softening point: 130°C
(4) B14: Glycidyl methacrylate-styrene-acrylonitrile copolymer [polymerization ratio: 40/45/15(%)]; limiting viscosity: 0.25 dl/g
(5) B15: Glycidyl methacrylate-methyl methacrylate copolymer [polymerization ratio: 40/60(%)]; limiting viscosity: 0.24 dl/g
(6) B16: Glycidyl methacrylate-styrene-acrylonitrile copolymer [polymerization ratio: 10/68/22(%)]; limiting viscosity: 0.28 dl/g

Particles (B-2):

(1) B21: Acrylic polymer particles; tradename "CHEMISNOW MX-150" (average particle diameter: 1.5 μm) produced by Soken Chemical & Engineering Co., Ltd.
(2) B22: Acrylic polymer particles; tradename "CHEMISNOW MX-1000" (average particle diameter: 20.0 μm) produced by Soken Chemical & Engineering Co., Ltd.
(3) B23: Acrylic polymer particles; tradename "CHEMISNOW MX-90H" (average particle diameter: 160 μm) produced by Soken Chemical & Engineering Co., Ltd. (out of the scope of the present invention)
(4) B24: Calcium phosphate particles; tradename "HAP-08NP" (average particle diameter: 0.8 μm) produced by Maruo Calcium Co., Ltd.
(5) B25: Calcium carbonate particles; tradename "CUBE-18BHS" (average particle diameter: 1.8 μm) produced by Maruo Calcium Co., Ltd.
(6) B26: Calcium stearate particles; tradename "NISSAN-ELECTOL MC-2" (average particle diameter: 1.1 μm) produced by NOF Corporation.
(7) B27: Silicone

[C] Black substance:

Carbon black was used as the black substance.

[D] Thermoplastic resin:

Polybutylene terephthalate (tradename "NOVADURAN 5007") produced by Mitsubishi Engineering-Plastics Corporation; melting point: 220°C

Production Example 1: Production of copolymer resin (A11)

100 parts of ion-exchanged water, 1.5 parts of sodium dodecylbenzenesulfonate, 0.1 part of t-dodecyl mercaptan, and a rubber polymer composed of 15 parts (solid content) of polybutadiene having an average particle diameter of 280 nm, 5 parts of styrene, 5 parts of acrylonitrile and 10 parts of methyl methacrylate, were charged into a 7-liter glass flask equipped with a stirrer, and heated while stirring. At the time at which the temperature reached 45°C, an aqueous activator solution composed of 0.1 part of sodium ethylenediaminetetracetate, 0.003 part of ferrous sulfate, 0.2 part of formaldehyde sodium sulfoxylate dihydrate and 15 parts of ion-exchanged water, and 0.1 part of diisopropylbenzenehydoperoxide, were added to the flask, and the contents of the flask were continuously reacted for one hour.

Thereafter, an incremental polymerization component comprising 50 parts of ion-exchanged water, 1 part of sodium dodecylbenzenesulfonate, 0.1 part of t-dodecyl mercaptan, 0.2 part of diisopropylhydroperoxide, 10 parts of styrene, 5 parts of acrylonitrile and 50 parts of methyl methacrylate was continuously added to the reaction mixture over 3 hours to continue the polymerization reaction thereof. After completion of adding the incremental component, the obtained reaction mixture was further continuously stirred for one hour, and then 0.2 part of 2,2-methylene-bis (4-ethylene-6-t-butylphenol) was added thereto. The resultant reaction product was taken out of the flask. The latex of the reaction product was solidified with 2 parts of calcium chloride, and the obtained solids were fully washed with water and then dried at 75°C for 24 hours, thereby obtaining a white powder of the copolymer resin (A11). It was confirmed that the thus obtained resin had a composition of butadiene rubber/styrene/acrylonitrile/methyl methacrylate (15/15/10/60 (%)), a polymerization conversion ratio of 97%, a grafting percentage of 40% and a limiting viscosity of 0.55 dl/g.

Production Example 2: Production of copolymer resin (A12)

The same procedure as defined in Production Example 1 was conducted except that polybutadiene having an average particle diameter of 310 nm was used as the rubber polymer, thereby obtaining the copolymer resin (A12) having a composition of butadiene rubber/styrene/acrylonitrile (40/42/18 (%)). It was confirmed that the thus obtained resin had a grafting percentage of 50% and a limiting viscosity of 0.45 dl/g.

Examples 1 to 34, Reference Examples 1 to 4 and Comparative Examples 1 to 7:

The respective components [A] to [D] were blended together at a mixing ratio shown in Table 1, melt-kneaded at a temperature of 220 to 240°C using a single-screw extruder, and then injection-molded to produce a test specimen. The thus obtained test specimen was subjected to various tests to evaluate properties thereof. The results are shown in Table 1. Meanwhile, in Examples 24 and 34, it was confirmed that the reaction mixture in oily form was transformed into particles upon the melt-kneading and/or injection-molding, and the particles had an average particle diameter of 0.5 μm.

Table 1

| Examples | | 1 | 2 | 3 | 4 | 5 | 6 | 7 | 8 |
|---|---|---|---|---|---|---|---|---|---|
| Mixing ratio | | | | | | | | | |
| Component [A] | A11 | 40 | 40 | 40 | 40 | 40 | 40 | 40 | 40 |
| | A12 | 35 | 35 | 35 | 35 | 35 | 35 | 25 | 25 |
| | A21 | – | – | – | – | – | – | 10 | 10 |
| Component [B]: (B-1) | B11 | 1.6 | – | – | – | – | – | – | – |
| | B12 | – | 1.6 | – | 0.1 | – | – | – | – |
| | B13 | – | – | 1.6 | – | 3 | – | – | – |
| | B14 | – | – | – | – | – | – | 1.6 | – |
| | B15 | – | – | – | – | – | 1.6 | – | – |
| | B16 | – | – | – | – | – | – | – | 1.6 |
| Amount of (B-1) based on 100 wt parts of [A] | | 2.1 | 2.1 | 2.1 | 0.1 | 4.0 | 2.1 | 2.1 | 2.1 |
| Component [C] | | 0.5 | 0.5 | 0.5 | 0.5 | 0.5 | 0.5 | 0.5 | 0.5 |
| Amount of [C] based on 100 wt parts of total of [A]+ (B-1)+[D] | | 0.7 | 0.7 | 0.7 | 0.7 | 0.7 | 0.7 | 0.7 | 0.7 |
| Component [D] | | – | – | – | – | – | – | – | – |
| Amount of [D] based on 100 wt parts of total of [A]+ (B-1)+[D] | | – | – | – | – | – | – | – | – |
| Evaluation | | | | | | | | | |
| Appearance of molded product | | A | A | A | A | A | A | A | A |
| Impact resistance | | A | A | A | A | A | A | A | A |
| Laser-marking color-developing property | | A | A | A | A | A | A | A | A |
| Laser-marking durability | | A | A | A | B | A | A | A | A |

Table 1 (continued)

| Examples | | 9 | 10 | 11 | 12 | 13 | 14 | 15 |
|---|---|---|---|---|---|---|---|---|
| Mixing ratio | | | | | | | | |
| Component [A] | A11 | 40 | 40 | 40 | 40 | 40 | 40 | 40 |
| | A12 | 35 | 35 | 35 | 35 | 35 | 25 | 25 |
| | A21 | – | – | – | – | – | 10 | 10 |
| Component [B]: (B-1) | B11 | – | – | – | – | – | – | – |
| | B12 | 0.1 | 0.1 | 8 | 8 | – | – | – |
| | B13 | – | – | – | – | – | – | – |
| | B14 | – | – | – | – | 1 | – | – |
| | B15 | – | – | – | – | – | 1 | – |
| | B16 | – | – | – | – | – | – | 1 |
| Amount of (B-1) based on 100 wt parts of [A] | | 0.1 | 0.1 | 10.7 | 10.7 | 1.3 | 1.3 | 1.3 |
| Component [C] | | 0.5 | 0.5 | 0.5 | 0.5 | 0.5 | 0.5 | 0.5 |
| Amount of [C] based on 100 wt parts of total of [A]+(B-1)+[D] | | 0.7 | 0.6 | 0.6 | 0.5 | 0.6 | 0.6 | 0.6 |
| Component [D] | | 0.5 | 8.5 | 0.1 | 8 | 1 | 1 | 1 |
| Amount of [D] based on 100 wt parts of total of [A]+(B-1)+[D] | | 0.7 | 10 | 0.1 | 8.8 | 1.3 | 1.3 | 1.3 |
| Evaluation | | | | | | | | |
| Appearance of molded product | | A | A | A | A | A | A | A |
| Impact resistance | | A | A | A | A | A | A | A |
| Laser-marking color-developing property | | A | A | A | A | A | A | A |
| Laser-marking durability | | A | A | A | A | A | A | A |

Table 1 (continued)

| Examples | | 16 | 17 | 18 | 19 | 20 | 21 | 22 | 23 | 24 |
|---|---|---|---|---|---|---|---|---|---|---|
| Mixing ratio | | | | | | | | | | |
| Component [A] | A11 | 40 | 40 | 40 | 40 | 40 | 40 | 40 | 40 | 40 |
| | A12 | 35 | 35 | 35 | 35 | 35 | 35 | 25 | 25 | 35 |
| | A21 | – | – | | | | – | 10 | 10 | – |
| Component [B]: (B-2) | B21 | 1.6 | – | – | – | – | – | – | 1.6 | – |
| | B22 | – | 1.6 | – | – | 0.1 | – | – | – | – |
| | B23 | – | – | – | – | – | – | – | – | – |
| | B24 | – | – | 1.6 | – | 3 | – | 1.6 | – | – |
| | B25 | – | – | – | 1.6 | – | – | – | – | – |
| | B26 | – | – | – | – | – | 1.6 | – | – | – |
| | B27 | – | – | – | – | – | – | – | – | – |
| Amount of (B-2) based on 100 wt parts of [A] | | 2.1 | 2.1 | 2.1 | 2.1 | 4.1 | 2.1 | 2.1 | 2.1 | 2.1 |
| Component [C] | | 0.5 | 0.5 | 0.5 | 0.5 | 0.5 | 0.5 | 0.5 | 0.5 | 0.5 |
| Amount of [C] based on 100 wt parts of [A] | | 0.7 | 0.7 | 0.7 | 0.7 | 0.7 | 0.7 | 0.7 | 0.7 | 0.7 |
| Evaluation | | | | | | | | | | |
| Appearance of molded product | | A | A | A | A | A | A | A | A | A |
| Impact resistance | | A | A | A | A | A | A | A | A | A |
| Laser-marking color-developing property | | A | A | A | A | A | A | A | A | A |
| Laser-marking durability | | A | A | A | B | A | A | A | A | A |

Table 1 (continued)

| Examples | | 25 | 26 | 27 | 28 | 29 | 30 | 31 | 32 | 33 | 34 |
|---|---|---|---|---|---|---|---|---|---|---|---|
| Mixing ratio | | | | | | | | | | | |
| Component [A] | A11 | 40 | 40 | 40 | 40 | 40 | 40 | 40 | 40 | 40 | 40 |
| | A12 | 35 | 35 | 35 | 35 | 35 | 35 | 35 | 25 | 35 | 35 |
| | A21 | – | – | – | – | – | – | – | 10 | – | – |
| Component [B]: (B-1) | B11 | 1 | – | – | – | – | 5 | – | – | – | 1 |
| | B12 | – | 1 | – | – | – | – | 5 | – | – | – |
| | B13 | – | – | 1 | 4 | 4 | – | – | 4 | – | – |
| | B14 | – | – | – | – | – | – | – | – | 1 | – |
| Amount of (B-1) based on 100 wt parts of [A] | | 1.3 | 1.3 | 1.3 | 5.3 | 5.3 | 6.7 | 6.7 | 5.3 | 1.3 | 1.3 |
| Component [B]: (B-2) | B21 | 1 | – | – | – | – | – | – | 2 | 1 | – |
| | B22 | – | – | – | – | – | – | 4 | – | – | – |
| | B23 | – | – | – | – | – | – | – | – | – | – |
| | B24 | – | 1.6 | 4 | 4 | – | – | – | 2 | – | – |
| | B25 | – | – | – | – | – | 4 | – | – | – | – |
| | B26 | – | – | – | – | 4 | – | – | – | – | – |
| | B27 | – | – | – | – | – | – | – | – | – | 1 |
| Amount of (B-2) based on 100 wt parts of [A] | | 1.3 | 2.1 | 5.3 | 5.3 | 5.3 | 5.3 | 5.3 | 5.3 | 1.3 | 1.3 |
| Component [C] | | 0.5 | 0.5 | 0.5 | 0.5 | 0.5 | 0.5 | 0.5 | 0.5 | 0.5 | 0.5 |
| Amount of [C] based on 100 wt parts of total of [A]+(B-1) | | 0.7 | 0.7 | 0.7 | 0.6 | 0.6 | 0.6 | 0.6 | 0.6 | 0.7 | 0.7 |
| Evaluation | | | | | | | | | | | |
| Appearance of molded product | | A | A | A | A | A | A | A | A | A | A |
| Impact resistance | | A | A | A | A | A | A | A | A | A | A |
| Laser-marking color-developing property | | A | A | A | A | A | A | A | A | A | A |
| Laser-marking durability | | A | B | A | A | A | A | A | A | A | A |

## Table 1 (continued)

| Comparative Examples | | 1 | 2 | 3 | 4 | 5 | 6 |
|---|---|---|---|---|---|---|---|
| Mixing ratio | | | | | | | |
| Component [A] | A11 | 40 | 25 | 40 | 40 | 25 | 25 |
| | A12 | 35 | 40 | 35 | 35 | 40 | 40 |
| | A21 | – | 10 | – | – | 10 | 10 |
| Component [B]: (B-1) | B11 | – | 1.6 | – | – | – | – |
| | B12 | – | – | – | – | – | – |
| | B13 | – | – | – | – | – | 1 |
| | B14 | – | – | – | – | – | – |
| Amount of (B-1) based on 100 wt parts of [A] | | – | 2.1 | – | – | – | 1.3 |
| Component [B]: (B-2) | B21 | – | – | – | – | – | – |
| | B22 | – | – | – | – | – | – |
| | B23 | – | – | – | 1.6 | – | – |
| | B24 | – | – | – | – | 1.6 | 1.6 |
| | B25 | – | – | – | – | – | – |
| | B26 | – | – | – | – | – | – |
| | B27 | – | – | – | – | – | – |
| Amount of (B-2) based on 100 wt parts of [A] | | – | – | – | 2.1 | 2.1 | 2.1 |
| Component [C] | | 0.5 | 0.5 | 0.5 | 0.5 | 0.5 | 0.5 |
| Amount of [C] based on 100 wt parts of total of [A]+(B-1) | | 0.7 | 0.7 | 0.7 | 0.7 | 0.7 | 0.7 |
| Component [D] | | – | – | 1 | – | – | – |
| Evaluation | | | | | | | |
| Appearance of molded product | | A | C | A | C | A | A |
| Impact resistance | | A | A | A | C | A | A |
| Laser-marking color-developing property | | A | C | B | A | C | C |
| Laser-marking durability | | C | B | C | A | B | B |

## Table 1 (continued)

| Reference Examples | | 1 | 2 | 3 | 4 | 5 | 6 |
|---|---|---|---|---|---|---|---|
| Mixing ratio | | | | | | | |
| Component [A] | A11 | 40 | 40 | 40 | 40 | 40 | 40 |
| | A12 | 35 | 35 | 35 | 35 | 35 | 35 |
| | A21 | – | – | – | – | – | – |
| Component [B]: (B-1) | B11 | – | – | – | – | – | – |
| | B12 | – | – | – | – | – | – |
| | B13 | – | 1 | 1 | 15 | 15 | – |
| | B14 | 15 | – | – | – | – | – |
| Amount of (B-1) based on 100 wt parts of [A] | | 20 | 1.3 | 1.3 | 20 | 20 | – |
| Component [B]: (B-2) | B21 | – | – | – | – | – | – |
| | B22 | – | – | – | – | – | – |
| | B23 | – | 1.6 | – | – | – | – |
| | B24 | – | – | 15 | 15 | 1.6 | 15 |
| | B25 | – | – | – | – | – | – |
| | B26 | – | – | – | – | – | – |
| | B27 | – | – | – | – | – | – |
| Amount of (B-2) based on 100 wt parts of [A] | | – | 2.1 | 20 | 20 | 2.1 | 20 |
| Component [C] | | 0.5 | 0.5 | 0.5 | 0.5 | 0.5 | 0.5 |
| Amount of [C] based on 100 wt parts of total of [A]+(B-1) | | 0.6 | 0.7 | 0.7 | 0.6 | 0.6 | 0.7 |
| Evaluation | | | | | | | |
| Appearance of molded product | | C | A | C | C | C | C |
| Impact resistance | | C | C | C | C | C | C |
| Laser-marking color-developing property | | A | A | A | A | A | A |
| Laser-marking durability | | A | A | A | A | A | A |

## Claims

1. A thermoplastic resin composition suitable for laser-marking and comprising:

   (A) a rubber-reinforced thermoplastic resin comprising:

   (A1) a copolymer resin obtainable by polymerizing, in the presence of 5-40% by weight of a rubber polymer (a), a vinyl-based monomer (b) comprising (b1) 25-60% by weight of (meth)acrylic acid ester units and (b2) 0-70% by weight of other monomer units, the total of (a), (b1) and (b2) being 100%; or
   (A1') a mixture of resin (A1) and a (co)polymer (A2) comprising vinyl-based monomers;

   (B) at least one material other than said (co)polymer (A2) and being selected from:

   (B1) an epoxy containing polymer, and/or

(B2) particles having an average diameter of 0.05 to 150μm; and

(C) a black substance.

2. A composition according to claim 1, wherein polymer (B1) and substance (C) are contained in amounts of 0.1 to 10 parts by weight and 0.01 to 5 parts by weight, respectively, based on 100 parts by weight of component (A).

3. A composition according to claim 1 or 2, wherein particles (B2) and substance (C) are contained in amounts of 0.1 to 10 parts by weight and 0.01 to 5 parts by weight, respectively, based on 100 parts by weight of component (A).

4. A composition according to claim 1, 2 or 3, wherein polymer (B1) the particles (B2) and substance (C) are contained in amounts of 0.1 to 10 parts by weight, 0.1 to 10 parts by weight and 0.01 to 5 parts by weight, respectively, based on 100 parts by weight of component (A).

5. A composition according to any preceding claim, wherein particles (B2) comprise at least one kind of particle selected from calcium phosphate, calcium carbonate, silica, alumina, talc, titanium dioxide, magnesium oxide, barium sulfate, compounds containing these materials as a main component, well as polystyrene-based cross-linked particles, divinyl benzene-based cross-linked particles, polymethyl methacrylate-based cross-linked particles and styrene-methyl methacrylate-based cross-linked particles.

6. A composition according to any one of claims 1 to 4, wherein particles (B2) comprise particles made of silicone oil.

7. A composition according to any preceding claim, wherein substance (C) comprises at least one material selected from carbon black, black iron oxide, titanium black and graphite.

8. A composition according to any preceding claim, further comprising:

(D) a thermoplastic resin other than (A) and other than one formed of units (b1) resin (D) having a melting point of 150 to 300°C; the components of the composition satisfying the following formulae:

$$(A) + (B1) + (D) = 100 \text{ (\% by weight)}$$

$$0 < (B1) \leq 10 \text{ (\% by weight)}$$

$$0 < (D) \leq 10 \text{ (\% by weight)}$$

$$0.01 \leq (C)/((A) + (B1) + (D)) = 5$$

9. A composition according to claim 8, wherein resin (D) comprises a polyester-based resin.

10. A composition according to claim 9, wherein the polyester-based resin comprises polybutylene terephthalate.